# EUROPÄISCHE PATENTANMELDUNG

(11) **EP 3 120 966 A1**
(43) Veröffentlichungstag der Anmeldung: **25.01.2017**
(21) Anmeldenummer: 16179926.7
(22) Anmeldetag: 18.07.2016
(51) Int. Cl.: B23K 26/00, B23K 26/03, B23K 26/382, B23K 26/386, B23K 26/082, B23K 103/00

(54) **VERFAHREN ZUM EINBRINGEN EINER DEFINIERTEN SCHWÄCHUNGSLINIE MIT EINEM GEPULSTEN LASERSTRAHL DURCH MATERIALABTRAG AN EINEM ÜBERZUGSMATERIAL**

(30) Priorität: 21.07.2015 DE 102015111799
(71) Anmelder: Eissmann Automotive Deutschland GmbH, 72574 Bad Urach (DE)
(72) Erfinder: Ebert, Robby, 09114 Chemnitz (DE); Klötzer, Sascha, 07545 Gera (DE); Mauersberger, Stefan, 09518 Großrückerswalde (DE)
(74) Vertreter: Mammel und Maser

(57) **Zusammenfassung**

Verfahren zum Einbringen einer definierten Schwächungslinie mit einem gepulsten Laserstrahl durch Materialabtrag an einem Überzugsmaterial Die Erfindung betrifft ein Verfahren zum Einbringen einer definierten Schwächungslinie durch Materialabtrag an einem Überzugsmaterial (20), das eine Sichtseite und eine der Sichtseite gegenüberliegende Rückseite (21) aufweist, bei dem ein gepulster Laserstrahl (31) aus einen Laser (30) über einen Spiegel (41) und eine Scanvorrichtung (12) auf die Rückseite (21) des Überzugsmaterials (20) gerichtet und entlang einer Bahn geführt wird und eine Beobachtungseinheit (11) vorgesehen ist, die dazu dient, den Schwächungsprozess zu überwachen, wobei die Beobachtungseinheit (11) derart angeordnet ist, dass ein von der Be-obachtungseinheit (11) zu detektierendes Licht (36) im Wesentlichen in dem Strahlengang des Laserstrahls (31) über die Scanvorrichtung (12) und den Spiegel (41) auf die Beobachtungseinheit (11) fällt und wobei der Laserstrahl (31) mittels der Scanvorrichtung (12) über das feststehende Überzugsmaterial (20) bewegt wird.

## Beschreibung

### Verfahren zum Einbringen einer definierten Schwächungslinie mit einem gepulsten Laserstrahl durch Materialabtrag an einem Überzugsmaterial

Die vorliegende Erfindung betrifft ein Verfahren zum Einbringen einer definierten Schwächungslinie mit einem gepulsten Laserstrahl durch Materialabtrag an einem Überzugsmaterial. Überzugsmaterialien mit eingebrachten Schwächungen werden im Automobilbereich eingesetzt, beispielsweise zur Herstellung von Überzügen für Airbags.

Airbags sind heutzutage in Kraftfahrzeugen an verschiedenen Stellen, zum Beispiel in Lenkrädern, Armaturenbrettern, Türen, Sitzen, Dachverkleidungen usw., integriert. Für eine zuverlässige Funktionsweise des Airbags ist es notwendig, dass der Kunststoffträger in allen seinen Schichten eine bzw. mehrere Materialschwächungen, sogenannte Sollbruchstellen, aufweist, die den Schusskanal des Airbags definieren.

Aus optischen Gründen beziehungsweise wegen des Designs fordern die Kraftfahrzeughersteller, dass beispielsweise der Beifahrerairbag, der im Armaturenbrett integriert ist, auf der dem Insassen zugewandten Seite hin unsichtbar gestaltet ist. Dazu wird das Armaturenbrett mit der darin integrierten Airbagklappe mit einem Überzugsmaterial versehen, das im Bereich der Berandung der Airbagklappe eine Schwächungslinie aufweist, so dass die sichere Öffnung der Airbagklappe und die Entfaltung des Airbags bei einem Aufprall gewährleistet bleibt.

Das Öffnen des Überzugsmaterials entlang der Schwächungslinie muss zudem innerhalb eines vorgegebenen Zeitfensters erfolgen. Ebenso muss ein unkontrollierter Partikelflug durch umherfliegende Bruchstücke des Überzugs auf jeden Fall vermieden werden.

Solche Überzugsmaterialien für Airbags sind aus unterschiedlichen Materialien bekannt, beispielsweise aus Kunststofffolien, Bezugsstoffen, Textilien, Slush oder faserigen Materialien wie Natur- oder Kunstleder. Gerade bei gehobenen Fahrzeugausstattungen werden die Überzüge häufig aus Naturleder hergestellt. Das im Automobilbereich eingesetzte Leder besteht aus einer Oberhaut und einer Lederhaut. Aufgrund der Dickenschwankungen des Leders und der verhältnismäßig geringen Dicke der Oberhaut wird bei der Erzeugung von Schwächungen in dem Leder durch Einschneiden in die Rückseite des Leders mit einem Messer oder einer Klinge häufig eine Schnitttiefe gewählt, bei der die Oberhaut unverletzt bleibt. Die natürlichen Schwankungsbreiten der unverletzten Oberhaut führen allerdings zu einer starken Schwankungsbreite der Reißfestigkeit.

Gerade bei Sollbruchlinien für Airbagabdeckungen sind die Anforderungen an eine reproduzierbare und geringe Reißfestigkeit besonders hoch, die bei einem mechanischen Einschneiden nicht immer erfüllt werden kann.

Es wurde bereits vorgeschlagen, in das Leder voneinander beabstandete linienförmige Perforationen einer Länge von weniger als 0,8 mm einzubringen, wie in der EP 1 750 978 B1 beschrieben. Ein auf diese Weise geschwächtes Leder weist aufgrund der minimalen Größe der eingebrachten Perforationen, die in der Größe der Lederporen liegen, im Wesentlichen unsichtbare Schwächungen bei guten Aufreißeigenschaften auf, wobei die Schwächungen insbesondere mit einer Klinge eingebracht werden.

Zudem ist bekannt, Schwächungslinien insbesondere auch in Airbagüberzugsmaterialien oder in Dekorschichten für Airbagabdeckungen mittels Lasern zu perforieren. Zum gezielten Schwächen von Leder mittels UV-Laserstrahlung werden Mikrolöcher in das Material eingebracht. Diese sind im Allgemeinen entlang einer Bahn angeordnet und bilden dadurch eine definierte Schwächungslinie. Die Bestrahlung erfolgt auf die Rückseite, die sogenannte Fleischseite des Leders, so dass die Vorder- bzw. Oberseite des Leders durch die Laserstrahlung nur minimal geschädigt wird.

Die Mikrolöcher werden im Allgemeinen durch mehrfache Bestrahlung mit einzelnen Laserpulsen generiert. Da Leder ein sehr inhomogenes Material ist, schwankt die Anzahl der Laserpulse, die zum vollständigen Durchbohren des Leders notwendig sind, erheblich, die Abweichungen betragen etwa ± 50 % vom Mittelwert.

Für eine definierte und sichere Perforation ist das vollständige oder nahezu vollständige Durchbohren des Leders jedoch unabdingbar.

Wird das Leder an der Stelle eines Mikrolochs jedoch weiter bestrahlt, obwohl schon eine vollständige Durchbohrung erfolgt ist, so stellt sich sehr schnell eine unerwünschte lokale Verfärbung und Aufhärtung des Leders ein.

Um Veränderungen in der Faserstruktur des Leders, die zur Aufwerfung und damit zur Sichtbarkeit der Schwächungslinie führen, zu vermeiden, wurde beispielsweise vorgeschlagen, das Leder vor der Laserbearbeitung entweder zu unterkühlen oder vorzuschrumpfen oder es mit einem speziellen Fixiermittel auf der Rückseite zu behandeln, wie in der WO 2005/049261 beschrieben.

Die DE 196 36 429 C1 beschreibt ein Verfahren zur Erzeugung einer Schwächungslinie in einem Überzugsmaterial durch einseitiges örtliches Abtragen des Überzugsmaterials in Form von Sacklöchern mittels steuerbarer gepulster Laserstrahlung, wobei eine Relativbewegung zwischen der Laserstrahlung und dem Überzugsmaterial in Richtung der zu erzeugenden Schwächungslinie erfolgt und die durch den Boden des jeweiligen Sacklochs transmittierte Laserstrahlung nach jedem Laserpuls mittels eines Sensors detektiert, der Integralwert gebildet und mit einem Sollwert verglichen wird und die Laserstrahlung bei Erreichen des Sollwertes abgeschaltet und nach erfolgter Relativbewegung beim nächsten noch zu schwächenden Sackloch wieder angeschaltet wird.

Die DE 198 50 299 A1 lehrt ein Verfahren zum Einbringen einer definierten Schwächungslinie durch Materialabtrag in ein translatorisch oder rotatorisch bewegtes Werkstück, bei dem die Vorschubbewegung des Werkstücks durch eine dieser Vorschubbewegung nachfolgende Auslenkung des Laserstrahls kompensiert wird und der Schwächungsprozess mit einer Beobachtungseinheit überwacht wird.

Die DE 10 2005 040 017 A1 lehrt ein Verfahren zur Bearbeitung eines Bauteils mithilfe von Laserstrahlung, bei dem das Bauteil mit Laserstrahlung beaufschlagt und Lumineszenzstrahlung gemessen wird.

Aus der US 6,140,604 ist ein Bohrverfahren mit einem gepulsten Laser bekannt, bei dem das beim Auftreffen eines Laserstrahls auf ein Material durch Prozessleuchten erzeugtes Licht detektiert wird.

Die DE 10 2013 104 138 B3 lehrt ein Verfahren, bei dem die optische und haptische Veränderung des mittels eines Laserstrahls geschwächten Leders dadurch verhindert werden soll, dass der Laserstrahl linienförmig an der Rückseite des Leders geführt wird und das linienförmige Führen ein mehrfaches Wiederholen einer Abtastbewegung ist, bei der entlang der Linie jeweils pro Auftreffort nur ein Laserpuls abgegeben wird. Die Parameter des Laserimpulses sind dabei so gewählt, dass dieser einen Energieeintrag bewirkt, der am jeweiligen Auftreffort zu einer Erwärmung des Überzugsmaterials auf eine Temperatur oberhalb einer Ablationsschwelle führt, jedoch die Temperatur in an den jeweiligen Auftrefforten angrenzenden Bereichen des Überzugsmaterials unterhalb einer Grenztemperatur liegt.

Die Kontrolle der Restwandstärke erfolgt ebenfalls mit einem Sensor, der dem Kurzpulslaser in Richtung des Laserstrahls gegenüberstehend auf der Sichtseite des faserigen Überzugsmaterials angeordnet ist. Der Sensor misst kontinuierlich die Stärke eines durch das faserige Überzugsmaterial transmittierenden Anteils der Laserpulse, so dass der Laserstrahl beim Erreichen der gewünschten minimalen Restwandstärke noch vor einem vollständigen Durchtritt durch das faserige Überzugsmaterial abgeschaltet werden kann. Ist an einem Auftreffort bereits die minimale Restwandstärke erreicht, erfolgt bei der nächsten Abtastbewegung eine lokale Abschaltung des Laserstrahls an diesem Auftreffort.

Eine solche Bestimmung der Restwandstärke mittels einer Transmissionsmessung macht es allerdings erforderlich, dass der Sensor der Position des Laserstrahls folgen kann. Ein solches Verfahren ist für die Bearbeitung mit hochdynamischen Laser-Scanvorrichtungen, bei dem der Laserstrahl über das feststehende Werkstück bewegt wird, ungeeignet.

Die Aufgabe der vorliegenden Erfindung besteht darin, die Verfahren zur Einbringung von Schwächungslinien mittels eines gepulsten Laserstrahls durch Materialabtrag an einem Überzugsmaterial, insbesondere Leder, dahingehend zu verbessern, dass sie auch unter Einsatz von hochdynamischen Laser-Scanvorrichtungen durchgeführt werden können und hinreichend geschwächte Überzugsmaterialien mit im Wesentlichen unsichtbaren Schwächungslinien erhalten werden.

Diese Aufgabe wird durch die Merkmale des Anspruchs 1 gelöst.

Bei dem erfindungsgemäßen Verfahren wird ein gepulster Laserstrahl aus einem Laser über einen Spiegel und eine Scanvorrichtung auf die Rückseite des Überzugsmaterials gerichtet und entlang einer Bahn geführt, wobei eine zur Überwachung des Schwächungsprozesses vorgesehene Beobachtungseinheit derart angeordnet ist, dass ein von der Be-obachtungseinheit zu detektierendes Licht im Wesentlichen in dem Strahlengang des Laserstrahls über die Scanvorrichtung und den Spiegel auf die Beobachtungseinheit fällt, wobei das Werkstück feststehend ist und der Laserstrahl mittels der Scanvorrichtung über das Werkstück bewegt wird.

Das Licht, das auf die Beobachtungseinheit fällt, folgt somit auf dem Wegstück zwischen Scanvorrichtung, Spiegel und auch zwischen dem Überzugsmaterial und der Scanvorrichtung im Wesentlichen demselben Strahlengang der Laserstrahlung, nur in umgekehrte Richtung. Der Laser und die Beobachtungseinheit befinden sich somit beide auf derselben Seite, nämlich der Rückseite des Überzugsmaterials. Nachdem der Strahlengang des Lichtes, das auf die Beobachtungseinheit fällt, sozusagen teilweise in den Strahlengang der Laserstrahlung integriert ist, ist die Beobachtungseinheit zu jedem Zeitpunkt in der Position des Laserstrahls und somit am momentanen Ort der stattfindenden Schwächung bzw. der Perforation oder des Lochs, so dass der Prozessverlauf auch bei Einsatz von hochdynamischen Laser-Scanvorrichtungen beobachtet werden kann.

Das Licht fällt dann "im Wesentlichen in denselben Strahlengang wie die Laserstrahlung", wenn wenigstens ein geringer Anteil des Lichts, das als aufgeweitetes Lichtbündel und nicht - wie die Laserstrahlung - als scharf gebündelter Strahl auf die Scanvorrichtung und den Spiegel fällt, mit dem scharf gebündelten Strahl der Laserstrahlung zusammenfällt.

Im Unterschied zum Stand der Technik befindet sich das Beobachtungselement auch nicht auf der Sichtseite des Leders, sondern auf der Rückseite des Leders und somit auf derselben Seite wie der Laser selbst. Nachdem sich Laser und Beobachtungseinheit auf derselben Seite des Überzugsmaterials befinden, können die Strahlengänge des Laserlichts und des auf das Beleuchtungselement fallenden Lichts teilweise identisch sein.

Anders als bei den aus dem Stand der Technik bekannten Verfahren wird erfindungsgemäß nicht die Intensität des durch das Loch hindurchgetretenen Primärlaserlichts in Form einer Transmissionsmessung detektiert, sondern Licht, das von der Primärstrahlung des Lasers verschieden ist. Bei dem von der Primärstrahlung des Lasers verschiedenen Licht kann es sich um das während des Laserns erzeugte Licht des Prozessleuchtens handeln oder um Licht, das von einer zusätzlichen Beleuchtungsquelle oder von Lumineszenz herrührt.

Durch die bei dem erfindungsgemäßen Verfahren verwendete Anordnung kann der Ort der Laserbearbeitung, d. h. der Ort, an dem die Laserstrahlung auf dem Überzugsmaterial auftritt, um es zu schwächen, direkt auf die Sensorfläche der Beobachtungseinheit abgebildet werden und somit der Laserprozess überwacht werden, ohne die Beobachtungseinheit selbst bewegen zu müssen. Die Erfindung eignet sich somit insbesondere für eine Prozessüberwachung bei der Laserbearbeitung mit hochdynamischen Laser-Scanvorrichtungen.

Durch die Option zur Speicherung der Sensordaten ist darüber hinaus eine hervorragende Möglichkeit zur Qualitätssicherung der Lederperforation und einem Nachweis über die erfolgreiche Bearbeitung gegeben.

Während des Laserns ist am Ort des Auftreffens des Laserstrahls auf der Überzugsmaterialrückseite ein Leuchten zu beobachten, das auf Plasma und thermische Strahlung zurück zu führen sein dürfte. Dieses Leuchten ist auf der Rückseite des Überzugmaterials so lange zu beobachten, wie am Ort des Auftreffens der Laserstrahlung noch Überzugsmaterial zur Erzeugung des Plasmas und der thermischen Strahlung vorhanden ist.

Hat der Laser jedoch an einem Ort das Überzugsmaterial vollständig abgetragen, so dass in dem Überzugsmaterial an diesem Ort ein Loch oder eine Perforation ist, erfolgt keine Prozessstrahlung mehr und in der Be-obachtungseinheit wird kein Licht der Prozessstrahlung mehr beobachtet. Somit ändert sich der Signalpegel des beobachteten Lichts der Prozessstrahlung. Diese Änderung kann als Trigger für den Prozessabbruch genutzt werden, d. h. es wird keine weitere Laserbearbeitung an dieser Stelle des Leders mehr durchgeführt.

Neben dem Prozessleuchten an der Rückseite des Leders kann auch die Lichtintensität einer zusätzlichen Beleuchtungsquelle ebenfalls mit der in dem Strahlengang des Laserlichts quasi integrierten Beobachtungseinheit detektiert werden. Die zusätzliche Beleuchtungsquelle kann sich auf bzw. an der Sicht- bzw. Vorderseite des Überzugsmaterials befinden. Ist das Leder an der betreffenden Stelle noch nicht hinreichend geschwächt, kann das von der auf der Sichtseite des Leders befindlichen Beleuchtungsquelle emittierte Licht nicht auf die Beobachtungseinheit fallen, da das noch nicht hinreichend geschwächte Leder für das Licht der Beleuchtungsquelle nicht durchlässig ist.

Sobald das Leder an der mittels des Laserstrahls geschwächten Stelle vollständig durchdrungen ist, tritt Licht dieser zusätzlichen Beleuchtungsquelle von der Sichtseite des Leders durch das Loch auf die Rückseite des Leders durch und gelangt dann teilweise in rückwärtiger Richtung des Strahlengangs des Laserlichts in die Beobachtungseinheit.

Ähnlich wie die zuvor beschriebene, auf der Sichtseite des Überzugsmaterials angeordnete Beleuchtungsquelle kann auf der Sichtseite des Überzugsmaterials auch eine Indikatorschicht aufgebracht sein, auf die der Laserstrahl nach vollständigem Durchbohren des Überzugsmaterials an der betreffenden Stelle auftritt. Durch das Auftreffen der Laserstrahlung auf die Indikatorschicht können Sekundärprozesse ausgelöst werden, beispielsweise die Emission von Lumineszenzstrahlung, wenn die Indikatorschicht eine lumineszierende Schicht ist. Das Lumineszenzlicht fällt dann teilweise durch das vollständig durchbohrte Loch zurück in Richtung der Scanvorrichtung, auf den Spiegel und auf die Beobachtungseinheit.

Die Indikatorschicht kann jedoch auch eine Metallschicht sein. Trifft der Laserstrahl nach vollständigem Durchbohren erstmals auf dieser Metallschicht auf, so wird ebenfalls eine Prozessstrahlung erzeugt, die dann auf dem oben beschriebenen Strahlengang in die Beobachtungseinheit gelangt.

Um zu erreichten, dass das Prozesslicht oder das von der zusätzlichen Beleuchtungsquelle erzeugte Licht im Wesentlichen im Strahlengang des Lasers auf die Beleuchtungseinheit fällt, ist im Strahlengang ein Spiegel vorgesehen, der die Laserstrahlung reflektiert, jedoch für die Strahlung des Prozessleuchtens oder die Strahlung der Beleuchtungsquelle oder das Lumineszenzlicht durchlässig ist.

Die Beobachtungseinheit dient dazu, den Laserprozess, d.h. das Bohren der Mikrolöcher, zu überwachen. Die Beobachtungseinheit kann beispielsweise ein Kamera- oder Fotodiodensystem sein.

Die Scanvorrichtung dient dazu, den Laserstrahl auf der Rückseite des Leders entlang auf der gewünschten Bahn zu bewegen. Im Allgemeinen umfassen Scanvorrichtungen einen Scankopf mit einer Treiber- und Ansteuerelektronik. Im Scankopf wird der Laserstrahl abgelenkt, dessen Ablenkungswinkel gemessen und (meistens) elektronisch geregelt. Die einfachste Methode, um eine Scanbewegung zu erzeugen, ist die Veränderung der Orientierung eines Spiegels.

Sobald in der Beobachtungseinheit die Über- oder Unterschreitung eines Schwellwerts des in der Beobachtungseinheit gemessenen Lichtes detektiert wird, wird eine Abschaltung des Lasers an diesem Ort bewirkt.

Im Falle der Beobachtung des Lichtes der Prozessstrahlung, die durch Auftreffen der Laserstrahlung auf das Leder erzeugt wird, erfolgt die Abschaltung des Lasers im Allgemeinen, wenn die Intensität der Prozessstrahlung plötzlich nachlässt.

Im Falle der Beobachtung des Lichtes der zusätzlichen Beleuchtungsquelle, des Lumineszenzlichtes oder des durch Auftreffen des Laserstrahls auf die Metallindikatorschicht verursachten Prozesslichtes erfolgt die Abschaltung des Lasers im Allgemeinen bei Überschreitung eines vorgegebenen Schwellwerts der Lichtintensität.

Selbstverständlich kann das von der Beobachtungsvorrichtung gemessene Licht, das von der primären Laserstrahlung verschieden ist, auch auf andere Weise erzeugt werden.

Im Rahmen des erfindungsgemäßen Verfahrens wird vorzugsweise ein gepulster UV-Laser eingesetzt, wobei ein Festkörperlaser mit einer Wellenlänge von 355 nm oder ein Excimerlaser mit einer Wellenlänge von 351 nm, 308 nm oder 248 nm besonders bevorzugt ist. Die Pulszeiten sollten vorzugsweise unter 200 ns liegen. Besonders bevorzugt sind Pulszeiten unterhalb von 100 ns Halbwertsbreite, insbesondere von etwa 35 ns. Die Pulsfrequenz des Lasers liegt im Allgemeinen zwischen 10 und 100 kHz, und vorzugsweise zwischen 40 und 85 kHz.

Die Scangeschwindigkeit der hochdynamischen Scanvorrichtung sollte mehr als 5 m/s und vorzugsweise etwa 20 m/s betragen.

Der Strahldurchmesser beträgt 5 bis 50 Mikrometer und vorzugsweise etwa 20 Mikrometer.

Als Überzugsmaterial wird vorzugsweise Leder, Kunstleder oder Planware verwendet. Im Allgemeinen beträgt der Durchmesser eines mit dem Laser in das Überzugsmaterial eingebrachten Lochs vorzugsweise 5 bis 50 Mikrometer und besonders bevorzugt 10 bis 25 Mikrometer bei einem Lochabstand von 20 bis 100 Mikrometer, vorzugsweise 35 bis 80 Mikrometer. Die Löcher befinden sich auf einer Linie, die gerade, aber auch gewellt, zickzackförmig oder anders verlaufen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung des erfindungsgemäßen Verfahrens,
Figur 2 zeigt eine bevorzugte Ausführungsform der Erfindung mit zusätzlichen Beleuchtungsmitteln,
Figur 3 zeigt eine bevorzugte Ausführungsform der Erfindung unter Beobachtung der Prozessstrahlung,
Figur 4 zeigt eine weitere bevorzugte Ausführungsform der Erfindung mit einer Indikatorschicht,
Figur 5 eine schematische Darstellung des Signalpegels in der Be-obachtungseinheit in Abhängigkeit von der Zahl der Wiederholungen und
Figur 6 eine schematische Darstellung des Signalpegels der Be-obachtungseinheit in Abhängigkeit von den Mikrolöchern.

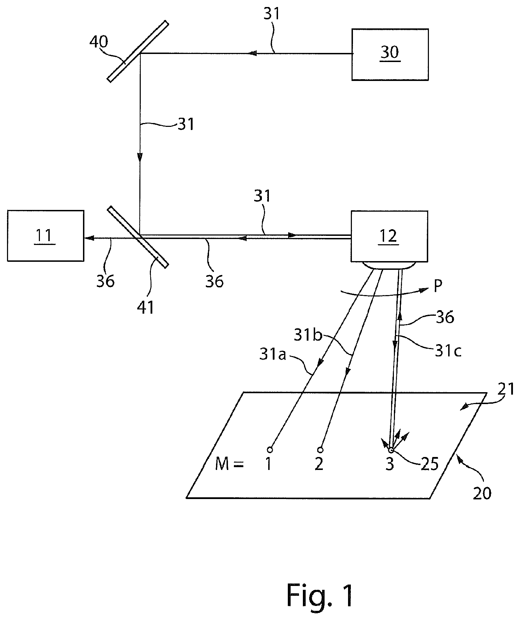

In Figur 1 ist schematisch ein Laser 30, eine Beobachtungseinheit 11, eine Scanvorrichtung 12 und ein Lederstück 20 dargestellt. Die Rückseite 21 des Lederstücks 20 weist in Figur 1 nach oben.

Der aus dem Laser 30 austretende fokussierte gepulste Laserstrahl 31, dessen Strahlengang ebenfalls mit 31 bezeichnet ist, wird an einem ersten Spiegel 40 und einem zweiten Spiegel 41 reflektiert und gelangt in die Scanvorrichtung 12, die dazu dient, den Laserstrahl 31 entlang einer bestimmten Bahn über das Lederstück 20 zu bewegen, wie durch den Pfeil P in der Figur 1 symbolisch dargestellt. Da die Laserstrahlung gepulst ist und der Laserstrahl 31 über das Lederstück 20 entlang einer Bahn bewegt wird, wird der Laserstrahl 31 zunächst zu dem Ort M = 1 entsprechend dem Strahl 31a bewegt, dann zu dem Ort M = 2 entsprechend dem Strahl 31 b und so weiter. Beim Lasern entsteht an jedem Ort M ein punktweiser Abtrag. Wird der Bewegungsablauf nun mit einer großen Anzahl von Wiederholung W durchgeführt, so entsteht nach und nach an jedem Ort M des punktförmigen Abtrags eine vollständige Durchbohrung des Leders 20, nämlich ein Loch 25.

Im Bereich des Leders 20 in Figur 1 sind verschiedene Orte M = 1, 2, .. auf dem Leder markiert.

Solange der Laserstrahl 31 an einem bestimmten Ort M das Leder 20 noch nicht vollständig zu einem Loch 25 durchbohrt hat, erzeugt der Laserpuls an dem Ort M ein schwaches Leuchten, das auf ein Plasma und eine thermische Strahlung zurück zu führen ist. Die Änderung dieses Leuchtens kann mit dem Beobachtungselement 11 detektiert werden, um festzustellen, wann eine vollständige Durchbohrung des Lochs 25 stattgefunden hat. Allerdings kann auch der Durchtritt des Lichts 36 einer anderen Lichtquelle 35 von unten durch das Leder 20 gemessen werden. Der Durchtritt des Lichts 36 durch das Loch 25 erfolgt, sobald das Loch 25 vollständig durchbrochen ist, vgl. Ort M = 3 mit dem Lichtstrahl 36, der in entgegengesetzte Richtung des Strahlengangs des Laserstrahls 31 auf den Spiegel 41 und dann auf die Beobachtungseinheit 11 fällt.

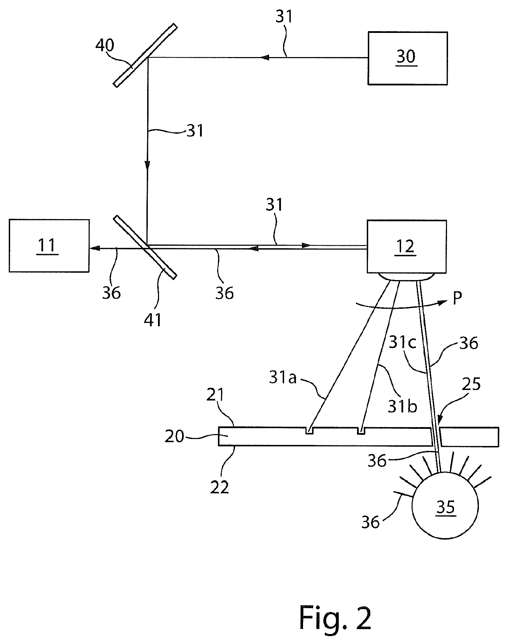

In der in Figur 2 beschriebenen Variante befindet sich unterhalb des Leders 20 vor dessen Vorderseite 22 eine zusätzliche Beleuchtungsquelle 35. Das Leder 20 wird mit gepulster Laserstrahlung 31 entlang der Bahn gemäß Pfeil P bestrahlt, zunächst gelangt der Strahl 31a auf das Leder, dann der Strahl 31 b etc. Strahl 31a und Strahl 31 b durchdringen das Leder 20 noch nicht. Auf der rechten Seite des Leders 20 in Figur 2 ist nun ein vollständig durchdrungenes Leder 20 mit einem Loch 25 dargestellt. Man erkennt, dass nun etwas Licht der sich unterhalb des Leders 20 befindlichen zusätzlichen Beleuchtungsquelle(n) 35, die beispielsweise LEDs sein können, durch das Loch 25 hindurch tritt und auf die Scanvorrichtung 12 und durch den für die Wellenlänge der zusätzlichen Beleuchtungsquelle 35 durchlässigen Spiegels 41 im Wesentlichen im Strahlengang des Laserlichts 31 in umgekehrter Richtung auf das Be-obachtungselement 11 trifft.

Es kommt somit zu einem plötzlichen Anstieg der Intensität der Wellenlänge dieses von der zusätzlichen Lichtquelle 35 erzeugten Lichts in der Beobachtungseinheit 11 nach vollständigem Durchbrechen der Lederschicht 20 an einem bestimmten Ort M.

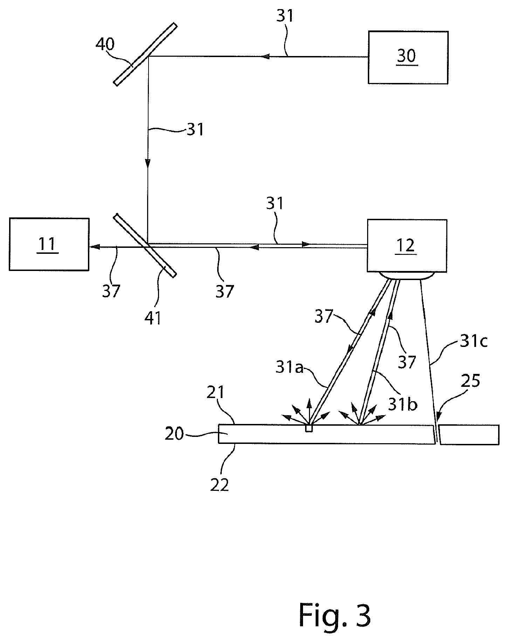

Die Überwachung des Bohrprozesses erfolgt mit einer Kamera als Be-obachtungseinheit 11 und einer oder mehr zusätzlichen Beleuchtungsquellen 35. Diese Variante zeichnet sich gegenüber der nachfolgend in Figur 3 beschriebenen Variante durch eine höhere Lichtintensität und damit eine höhere Empfindlichkeit aus. Die zusätzlichen Beleuchtungsquelle(n) 35, die beispielsweise LEDs sein können, befinden sich unterhalb des Leders 20 auf dessen Sichtseite 22.

Die Auswertung des Signalpegels der Beobachtungseinheit 11 erfolgt mit einer Videoanalysesoftware, die wiederum mit dem Laser 30 gekoppelt ist. Der Spiegel 41 kann ein dichroitischer dielektrischer Spiegel sein oder auch ein anderweitiger Filter, der für die Wellenlänge des Lichts 36 der zusätzlichen Strahlungsquelle 35 durchlässig und für die Laserstrahlung 31 undurchlässig ist. Sobald Licht 36 der Wellenlänge der zusätzlichen Beleuchtungsquelle 35 auf die Beobachtungseinheit 11 fällt, wird der Bohrprozess für das entsprechende Loch 25 selektiv beendet.

In einer in Figur 3 beschriebenen Variante trifft die Laserstrahlung 31 wie zuvor beschrieben auf das Leder 20. Der Prozess wird dadurch überwacht, dass die Veränderung der Prozessstrahlung 37 des Leders 20 beobachtet wird. Solange noch kein vollständig durchgängiges Loch 25 in das Leder 20 gebohrt ist, wird am Ort des Auftreffens der Laserstrahlung 31 a, b, auf das Leder 20 Prozessstrahlung 37 in alle Richtungen emittiert. Ein Teil der Prozessstrahlung 37 gelangt in das Beobachtungselement 11, vgl. Figur 3, linker Bereich des Leders 20.

Ist hingegen das Leder 20 vollständig durchbohrt (rechter Bereich des Leders 20 in Figur 3), so fällt der Laserstrahl 31c durch das Loch 25 hindurch und es wird nahezu kein Plasma und keine thermische Strahlung mehr erzeugt. Die Signalintensität geht, wenn man das Prozessleuchten 37 misst, bei vollständiger Durchbohrung sprunghaft zurück. Die plötzliche Veränderung der Signalintensität des Prozessleuchtens 37 kann somit verwendet werden, um den Abbruch des Laserprozesses zu steuern.

Die Auswertung erfolgt bei dieser Variante mit einer schnellen Messsoftware, die an die Laseranlage gekoppelt ist. Sobald kein Prozessleuchten 37 in der Beobachtungseinheit 11 mehr detektiert wird, wird der Bohrprozess für das betreffende Loch 25 selektiv beendet.

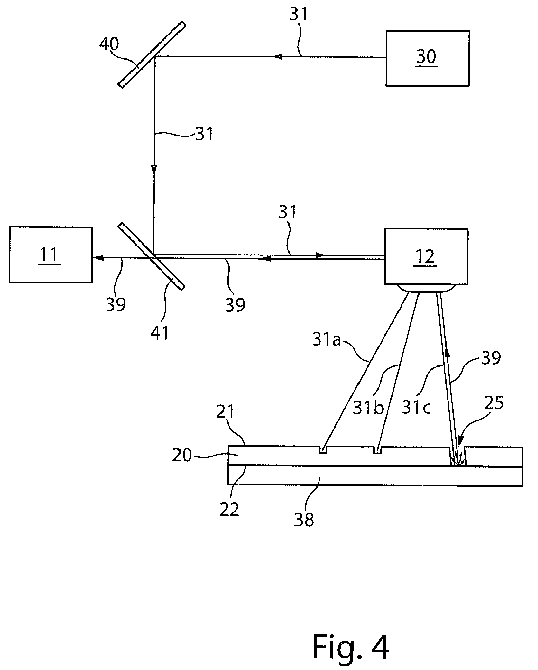

In einer weiteren Variante der Erfindung gemäß Figur 4 ist auf der Vorderseite 22 des Leders 20 und damit nicht auf der Seite 21 des Leders 20, auf der sich das Beobachtungselement 11 befindet, eine Indikatorschicht 38 vorgesehen. Sobald das Leder 20 mit einem Loch 25 durchbohrt ist, gelangt die Laserstrahlung 31 auf die Indikatorschicht 38 und erzeugt dort Sekundärstrahlung 39 (Lumineszenz, Plasma- oder thermische Strahlung), die teilweise wieder durch das Loch 25 hindurchtritt, und in rückwärtiger Richtung im Wesentlichen im Strahlengang der Laserstrahlung 31 in das Beobachtungselement 11 gelangt und dort detektiert wird.

Ist die Indikatorschicht 38 beispielsweise eine Metallfolie, so erfolgt beim Auftreffen der Laserstrahlung 31 auf die Metallfolie ein gegenüber dem Auftreffen der Laserstrahlung 31 auf das Leder 20 gemäß Figur 3 deutlich verstärktes Prozessleuchten durch Plasma und thermische Strahlung. Die Intensität der durch die Metallfolie verstärkten Prozessstrahlung ist in der Regel etwa 3 x so hoch wie die durch den Auftritt der Laserstrahlung 31 auf das Leder erzeugte Prozessstrahlung.

In einer weiteren Abwandlung wird anstelle der Indikatorschicht 38 aus Metall eine Indikatorschicht 38 aus einem photolumineszierenden oder phosphoreszierenden Materials eingesetzt. Sobald das Leder 20 durch die Laserstrahlung 31 durchgängig von einem Bohrloch 25 durchquert ist, trifft die Laserstrahlung 31 auf die unterhalb des Leders 20 befindliche Indikatorschicht 38, die beim ersten Auftreffen eines Laserstrahls 31 Lumineszenzlicht 39 aussendet, das durch das Loch 25 in dem Leder 20 und über die Scanvorrichtung 12 und durch den für das Lumineszenzlicht 39 durchlässigen Spiegel 41 auf das Beobachtungssystem 11 fällt.

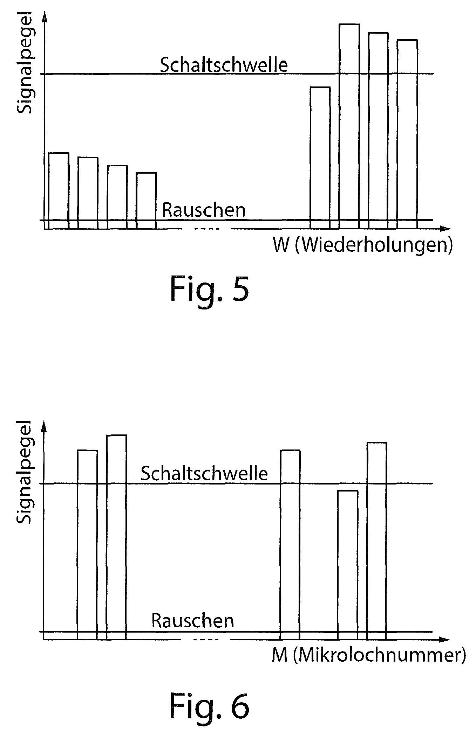

In Figur 5 ist der Signalpegel der mit der Beobachtungseinheit 11 detektierten Strahlung der zusätzlichen Beleuchtungsquelle 35 aus Figur 2 schematisch in Abhängigkeit von der Anzahl der Wiederholungen W dargestellt. Nachdem das Leder 20 zunächst noch kein Loch 25 aufweist und die Strahlung 36 der zusätzlichen Beleuchtungsquelle 35 auch nicht durch das Leder 20 durchtreten kann, wird anfänglich nur ein Rauschen detektiert. Nach einer Vielzahl von Wiederholungen W steigt der Signalpegel plötzlich an und die Schaltschwelle wird überschritten. Das Überschreiten der Schaltschwelle wird von der Beobachtungseinheit 11 registriert und im Folgenden der Bohrprozess für dieses Mikroloch 25 beendet.

In Figur 6 ist der Signalpegel für verschiedene Mikrolöcher dargestellt. Nachdem im Allgemeinen die in das Naturmaterial Leder eingebrachten Mikrolöcher voneinander abweichen, sind auch die an einem jeden Mi-kroloch gemessenen Signalpegel in der Regel unterschiedlich.

Die Erfassung des Signalpegels erfolgt für jedes zu generierende Mikroloch während der Laserbearbeitung, so dass bei einer weiteren Abarbeitung des Bewegungsalgorithmus der Laser 30 nur noch an den Stellen der nicht vollständig durchbohrten Mikrolöcher 25 zugeschaltet wird. Auch kann der Laserprozess bei einer bestimmten Anzahl von durchbohrten Mikrolöchern 25 vollständig abgebrochen werden.

## Patentansprüche

1. Verfahren zum Einbringen einer definierten Schwächungslinie durch Materialabtrag an einem Überzugsmaterial (20), das eine Sichtseite (22) und eine der Sichtseite (22) gegenüberliegende Rückseite (21) aufweist, bei dem ein gepulster Laserstrahl (31) aus einen Laser (30) über einen Spiegel (41) und eine Scanvorrichtung (12) auf die Rückseite (21) des Überzugsmaterials (20) gerichtet und entlang einer Bahn geführt wird und eine Beobachtungseinheit (11) vorgesehen ist, die dazu dient, den Schwächungsprozess zu überwachen, wobei die Beobachtungseinheit (11) derart angeordnet ist, dass ein von der Beobachtungseinheit (11) zu detektierendes Licht (36, 37, 39) im Wesentlichen in dem Strahlengang des Laserstrahls (31) über die Scanvorrichtung (12) und den Spiegel (41) auf die Beobachtungseinheit (11) fällt und wobei der Laserstrahl (31) mittels der Scanvorrichtung (12) über das feststehende Überzugsmaterial (20) bewegt wird.

2. Verfahren nach Anspruch 1, **dadurch gekennzeichnet, dass** sich der Laser (30) und die Beobachtungseinheit (11), die vorzugsweise eine Fotodiode oder Kamera ist, auf der Rückseite (21) des Überzugsmaterials (20) befinden.

3. Verfahren nach einem der vorangegangenen Ansprüche, **dadurch gekennzeichnet, dass** die Beobachtungseinheit (11) nicht die primäre Strahlung (31) des Lasers (30) detektiert.

4. Verfahren nach einem der vorangegangenen Ansprüche, **dadurch gekennzeichnet, dass** die Beobachtungseinheit (11) das beim Auftreffen des Laserstrahls (31) auf ein Material (20, 38) durch Prozessleuchten erzeugtes Licht (37) detektiert oder Licht (36) einer zusätzlichen Beleuchtungsquelle (35) oder Lumineszenzlicht (39).

5. Verfahren nach Anspruch 4, **dadurch gekennzeichnet, dass** das Prozessleuchten durch das Auftreffen des Laserstrahls (31) auf das Überzugsmaterial (20) selbst erfolgt oder nach vollständigem Durchbohren des Überzugsmaterials (20) zu einem Loch (25) und Durchtritt des Laserstrahls (31) durch das erzeugte Loch (25) durch Auftreffen des Laserstrahls (31) auf eine sich auf der Sichtseite (22) des Überzugsmaterials (20) befindliche Indikatorschicht (38).

6. Verfahren nach Anspruch 4, **dadurch gekennzeichnet, dass** die Beleuchtungsquelle (35) oder die Lumineszenzschicht (39) an der Sichtseite (22) des Überzugsmaterials (20) angeordnet ist.

7. Verfahren nach einem der vorangegangenen Ansprüche, **dadurch gekennzeichnet, dass** der Laser (30) abgeschaltet wird, sobald die Beobachtungseinheit (11) die Über- oder Unterschreitung eines Schwellwerts des in der Beobachtungseinheit (11) gemessenen Lichtes (36, 37, 39) detektiert.

8. Verfahren nach einem der vorangegangenen Ansprüche, **dadurch gekennzeichnet, dass** eine bestimmte Einstellung der Scanvorrichtung (12) mit einem bestimmten Ort M für die einzubringende Schwächung auf dem Überzugsmaterial (20) korreliert.

9. Verfahren nach einem der vorangegangenen Ansprüche, **dadurch gekennzeichnet, dass** der Spiegel (41) für das mit der Beobachtungseinheit (11) zu detektierende Licht (36, 37, 39) durchlässig und für die Laserstrahlung (31) nicht durchlässig ist.

10. Verfahren nach einem der vorangegangenen Ansprüche, **dadurch gekennzeichnet, dass** der Ort M des Auftreffens der Laserstrahlung (31) auf das Überzugsmaterial (20) direkt auf der Beobachtungseinheit (11) abgebildet wird.

11. Verfahren nach einem der vorangegangenen Ansprüche, **dadurch gekennzeichnet, dass** die Beobachtungseinheit (12) nicht bewegt wird.

12. Verfahren nach einem der vorangegangenen Ansprüche, **dadurch gekennzeichnet, dass** die Scanvorrichtung (12) eine hochdynamische Scanvorrichtung ist.

13. Verfahren nach einem der vorangegangenen Ansprüche, **dadurch gekennzeichnet, dass** die Pulszeiten des Lasers (30) unterhalb von 200 ns liegen.

14. Verfahren nach einem der vorangegangenen Ansprüche, **dadurch gekennzeichnet, dass** ein Loch (25) durch mehrfaches Bestrahlen mit einzelnen Laserpulsen generiert wird.
